# Europäisches Patentamt

# European Patent Office

# Office européen des brevets

(19)

(11) Veröffentlichungsnummer : **0 087 821**
**B1**

(12) **EUROPÄISCHE PATENTSCHRIFT**

(45) Veröffentlichungstag der Patentschrift :
03.12.86

(21) Anmeldenummer : 83102094.6

(22) Anmeldetag : 03.03.83

(51) Int. Cl.⁴ : **B 23 K 9/10**, H 02 M 3/315

(54) Vorrichtung zur Erzeugung von Impuls-Schweissstrom.

(30) Priorität : 03.03.82 BG 55620/82
03.03.82 BG 55621/82
03.03.82 BG 58258/82

(43) Veröffentlichungstag der Anmeldung :
07.09.83 Patentblatt 83/36

(45) Bekanntmachung des Hinweises auf die Patenterteilung : 03.12.86 Patentblatt 86/49

(84) Benannte Vertragsstaaten :
CH DE FR GB LI SE

(56) Entgegenhaltungen :
BG-A-    32 452
BG-A-    32 453
CH-A-    623 252
DE-A- 2 713 045
DE-A- 2 802 505

(73) Patentinhaber : Z N I K A
J. Vischovgradski-Str. 46
Sofia (BG)

(72) Erfinder : Marvakov, Ivan Kirilov, Dipl.-Ing.
L. Stanev-Strasse 44
Sofia (BG)
Erfinder : Russev, Todor Jordanov, Dipl.-Ing.
Strandja-Strasse 151
Sofia (BG)
Erfinder : Sikov, Kostadin Sikov, Dipl-.Ing.
Komplex Tschervena Svesda, Block 47,-3
Sofia (BG)

(74) Vertreter : Ebbinghaus, Dieter et al
v. FÜNER, EBBINGHAUS, FINCK Patentanwälte European Patent Attorneys Mariahilfplatz 2 & 3
D-8000 München 90 (DE)

**Beschreibung**

Die Erfindung bezieht sich auf eine Anordnung zur Erzeugung von Impuls-Schweißstrom der im Oberbegriff des Patentanspruches 1, beschriebenen aus der BG-A-32 453 bekannten Art.

Aus der DE-A-2 713 045 ist eine Speisequelle für Schweißanlagen bekannt, die der Erzeugung eines sich relativ langsam ändernden Stromes dient. Der Wert des Stromes wird durch Änderung der Speise- und Entladungsfrequenz von Kondensatoren gesteuert. Da im Ausgangskreis der Schaltung eine Induktivität sowie eine Paralleldiode vorgesehen sind, werden die Amplituden der Ausgangsimpulse stark begrenzt und keine Ausgangsimpulse mit relativ hoher Frequenz erzeugt.

Aus der BG-A-32 452 ist eine Schaltungsanordnung zur Erzeugung von Impuls-Schweißstrom bekannt. Diese Schaltungsanordnung weist eine stabilisierte Stromquelle auf, zu der in Reihe eine Drossel, die Primärwicklung eines Impulstransformators sowie ein erster und ein zweiter Thyristor geschaltet sind. Parallel zur Primärwicklung des Impulstransformators ist eine Reihenschaltung vorgesehen, die aus einem dritten und aus einem vierten Thyristor besteht. Zwischen dem gemeinsamen Punkt des dritten und vierten Thyristors und dem gemeinsamen Punkt des zweiten Thyristors und der stabilisierten Stromquelle ist ein fünfter Thyristor und zwischen dem gemeinsamen Punkt der Drossel und dem dritten Thyristor und dem gemeinsamen Punkt des ersten und zweiten Thyristors ist ein sechster Thyristor geschaltet. Ferner ist zwischen dem gemeinsamen Punkt des dritten und vierten Thyristors und dem gemeinsamen Punkt des ersten und zweiten Thyristors ein Kondensator angeschlossen. Die Sekundärwicklung des Impulstransformators ist über eine Diode mit dem Schweißlichtbogen verbunden. Bei dieser Schaltungsanordnung werden die sechs Thyristoren jedoch ungleichmäßig geladen. So werden z. B. der dritte und der sechste Thyristor im Vergleich zu den übrigen auf den doppelten Wert geladen. Außerdem erhalten der zweite und der fünfte Thyristor zu bestimmten Zeitpunkten um das doppelte höhere Spannungen. Dies führt zu einer uneffektiven Anwendung der in der Schaltung vorgesehenen Thyristoren.

Aus der eingangs erwähnten BG-A-32 453 ist eine Anordnung zur Erzeugung von Impuls-Schweißstrom bekannt, die eine Impulsstromquelle enthält, zu der in Reihe ein erster Thyristor und die Primärwicklung eines Impulstransformators geschaltet sind, wobei parallel zur Primärwicklung ein zweiter Thyristor geschaltet ist. Die Sekundärwicklung des Impulstransformators ist über eine Diode mit dem Schweiß-Lichtbogen verbunden. Zwischen dem gemeinsamen Punkt des ersten und des zweiten Thyristors und der Primärwicklung des Impulstransformators ist ein Kondensator geschaltet. Parallel zum zweiten Thyristor ist eine Diode angeschlossen. Aufgrund dieser Schaltungsanordnung hat der Impuls-Schweißstrom jedoch ein relativ niedriges Tastverhältnis, und die positiven Fronten der Erhöhung der Spannung an den Thyristoren sind sehr steil, was zu einem zufälligen Schalten führen kann.

Der Erfindung liegt daher die Aufgabe zugrunde, eine Anordnung zur Erzeugung von Impuls-Schweißstrom zu schaffen, bei der der Impuls-Schweißstrom ein erhöhtes Tastverhältnis aufweist und die positiven Fronten der Spannung an den Thyristoren eine verminderte Steilheit haben.

Diese Aufgabe wird durch die kennzeichnenden Merkmale des Patentanspruches 1 gelöst.

Vorteilhafte Ausgestaltungen der Erfindung sind Gegenstand der Unteransprüche 2 bis 4.

Die Vorteile der erfindungsgemäßen Anordnung bestehen darin, daß der Impuls-Schweißstrom ein höheres Tastverhältnis aufweist, wobei die steilen positiven Fronten der Spannung an den Thyristoren vermieden sind.

Die Erfindung wird anhand der in der Zeichnung dargestellten Ausführungsbeispiele näher erläutert.

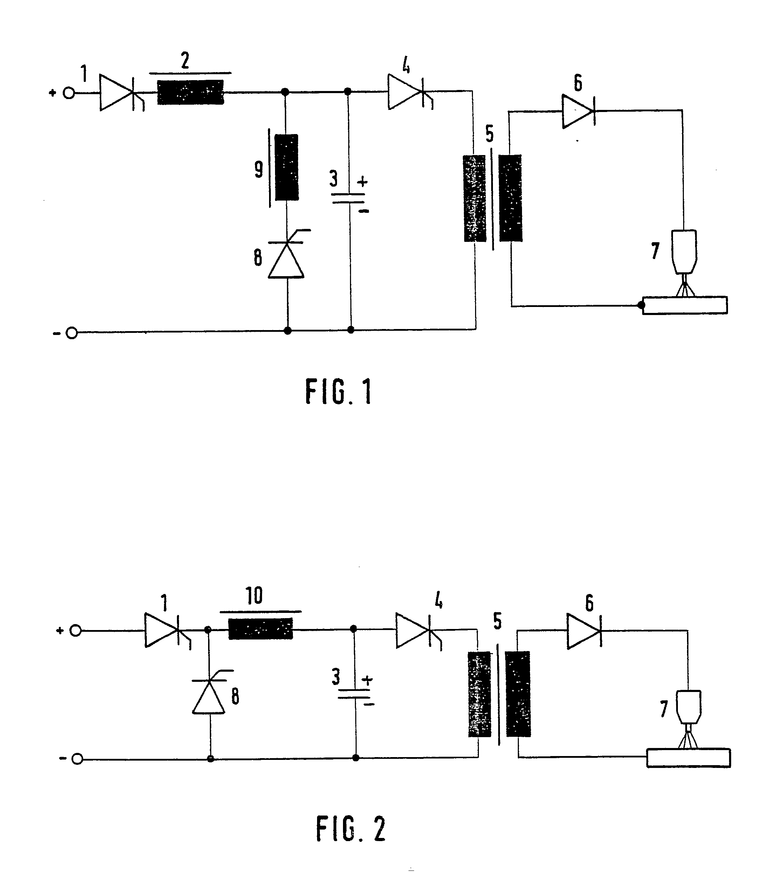

Fig. 1 zeigt eine Anordnung, bei der an den positiven Pol der speisenden Spannung die Anode eines ersten Thyristors 1 geschaltet ist, deren Kathode über eine Drossel 2 und einen Kondensator 3 an den negativen Pol der speisenden Spannung angeschlossen ist. An den gemeinsamen Punkt der ersten Drossel 2 und des Kondensators 3 ist die Anode eines zweiten Thyristors 4 angeschlossen, dessen Kathode über die Primärwicklung des Impulstransformators 5 am negativen Pol der speisenden Spannung liegt. Die Sekundärwicklung des Impulstransformators 5 ist über eine Diode 6 an den Schweiß-Lichtbogen 7 geführt. Die Anode eines dritten Thyristors 8 ist zum negativen Pol der speisenden Spannung geführt, während seine Kathode über die zweite Drossel 9 mit dem gemeinsamen Punkt der ersten Drossel 2, des Kondensators 3 und der Anode des zweiten Thyristors 4 verbunden ist. Die in Fig. 1 gezeigte Anordnung arbeitet wie folgt :

Bei Schaltung des Thyristors 1 wird der Kondensator 3 über den Thyristor 1 und die Drossel 2 von der speisenden Spannung mit der in Fig. 1 gezeigten Polarität geladen. Nachdem die Ladung beendet und der Thyristor 1 ausgeschaltet ist, wird der Thyristor 4, über den der Kondensator 3 durch die Primärwicklung des Impulstransformators 5 entladen wird, eingeschaltet, wobei über die Sekundärwicklung des Impulstransformators 5, die Diode 6 und den Schweiß-Lichtbogen 7 ein Stromimpuls läuft. Infolge der Induktivität des Impulstransformators 5 kehrt ein Teil der Energie des Kondensators 3 zurück in den Kondensator 3, wobei sie ihn mit entgegengesetzter Polarität wieder auflädt. Nach der Beendigung der Wiederaufladung und Ausschalten des Thyristors 4 wird der Thyristor 8 eingeschaltet. Es wird ein Kreis aus dem Thyristor 8, der Drossel 9 und dem Kondensator 3 gebildet, wobei dieser entladen und mit der ursprünglichen Polarität auf eine Spannung geladen wird, deren Wert unter dem der Stromquelle liegt. Da der Wiederaufladungskreis unabhängig vom Transformator und seiner relativ großen Induktivität ist, verläuft bei passender Dimensionierung der Drossel 9 der Prozeß relativ schnell. Danach folgt eine neue Einschaltung des Thyristors 1, wobei sich der Kondensator 3 über die Drossel 2 wieder auflädt. Der beschriebene Vorgang wiederholt sich von neuem. In Abhängigkeit davon, ob der Thyristor 1 nach Beendigung der Wiederaufladung des Kondensators 3 oder in einem bestimmten Moment des Wiederaufladungsprozesses durch den Thyristor 8 und die Drossel 9 eingeschaltet wird, wird der Kondensator 3 auf eine unterschiedliche Spannung aufgeladen, wobei die Endspannung umso höher ist, je früher der Thyristor 1 eingeschaltet wird. Das Vorhandensein einer gesonderten Drossel in den Stromkreisen beider Thyristoren 1 und 8 erlaubt die Einschaltung des Thyristors 1 während der Wiederaufladung durch den Thyristor 8 ohne unzulässig große Steilheiten der Stromerhöhung durch den Thyristor 1.

Die gegenseitigen Verbindungen zwischen den Elementen der Anordnung ermöglichen es, die steilen positiven Fronten der Erhöhung der Spannung an den Thyristoren zu vermeiden, da bei Schaltung jedes der Thyristoren 1 und 8 am anderen eine Erhöhung der Spannung in negative Richtung und nicht in positive Richtung erfolgt. Weiterhin beschränken beide Drosseln und der Kondensator bei Schaltung eines der drei Thyristoren die Steilheit der Spannung auf den anderen zwei auf sehr niedrige Werte.

Fig. 2 zeigt ein anderes Ausführungsbeispiel der Anordnung. Sie unterscheidet sich dadurch von der der Fig. 1, daß der gemeinsame Punkt zwischen dem ersten Thyristor 1 und der ersten Drossel 2 sowie der gemeinsame Punkt zwischen dem dritten Thyristor 8 und der zweiten Drossel 9 kurzgeschlossen sind, während beide parallelen Drosseln 2 und 9 durch eine gemeinsame Drossel 10 ersetzt sind.

Die Arbeitsweise der Anordnung der Fig. 2 ist analog der Arbeitsweise der der Fig. 1 unter der Bedingung, daß der Thyristor 1 nur eingeschaltet wird, nachdem der Strom durch den Thyristor 8 durch Null läuft. In diesem Falle sind keine Drosseln in den Stromkreisen beider Thyristoren 1 und 8 nötig und es genügt die Drossel 10. Offensichtlich ist diese Anordnung einfacher, aber sie kann nur verwendet werden, wenn keine Notwendigkeit der Regelung der Amplitude der Ausgangsimpulse besteht.

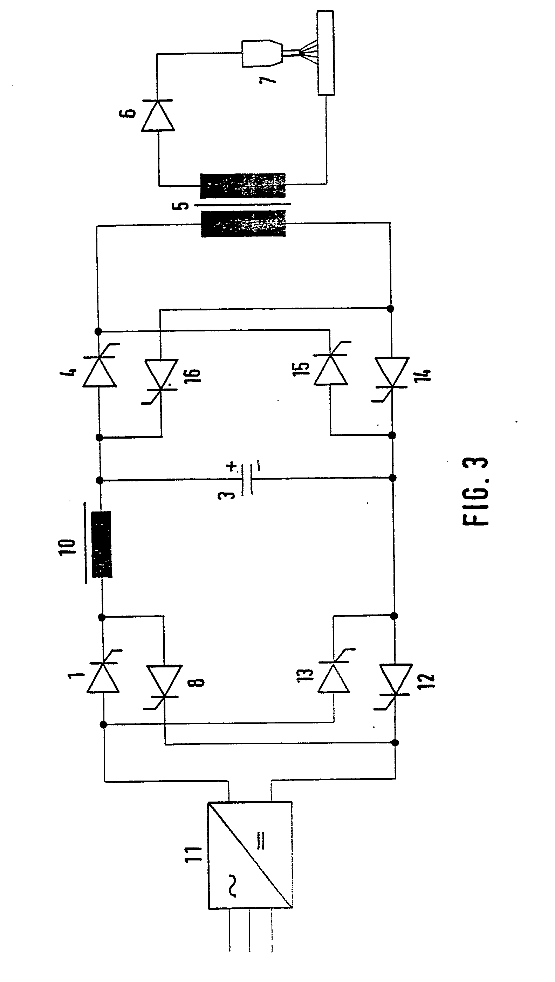

In Fig. 3 ist eine weitere Ausführung der erfindungsgemässen Anordnung beispielsweise gezeigt. Zwischen die Klemmen eines speisenden Stromgleichrichters 11 sind in Reihe der erste Thyristor 1, die Drossel 10, der Kondensator 3 und der vierte Thyristor 12 geschaltet. Zwischen den gemeinsamen Punkt des ersten Thyristors 1 und des Gleichrichters 11 und den gemeinsamen Punkt des Kondensators 3 und des vierten Thyristors 12 ist ein fünfter Thyristor 13 geschaltet, während zwischen dem gemeinsamen Punkt des ersten Thyristors 1 und der Drossel 10 und dem gemeinsamen Punkt des vierten Thyristors 12 und des Stromgleichrichters 11 ein dritter Thyristor 8 liegt. Parallel zum Kondensator 3 ist ein Stromkreis, bestehend aus dem zweiten Thyristor 4, der Primärwicklung des Impulstransformators 5 und dem sechsten Thyristor 14 geschaltet, wobei der siebte Thyristor 15 zwischen den gemeinsamen Punkt des Kondensators 3 und des sechsten Thyristors 14 und den gemeinsamen Punkt des zweiten Thyristors 4 und der Primärwicklung des Impulstransformators 5 geschaltet ist, während zwischen dem gemeinsamen Punkt der Primärwicklung des Impulstransformators 5 und des sechsten Thyristors 14 und dem gemeinsamen Punkt des Kondensators 3 und des zweiten Thyristors 4 ein achter Thyristor 16 liegt. Die Sekundärwicklung des Impulstransformators 5 ist über die Diode 6 mit dem Schweiß-Lichtbogen 7 verbunden.

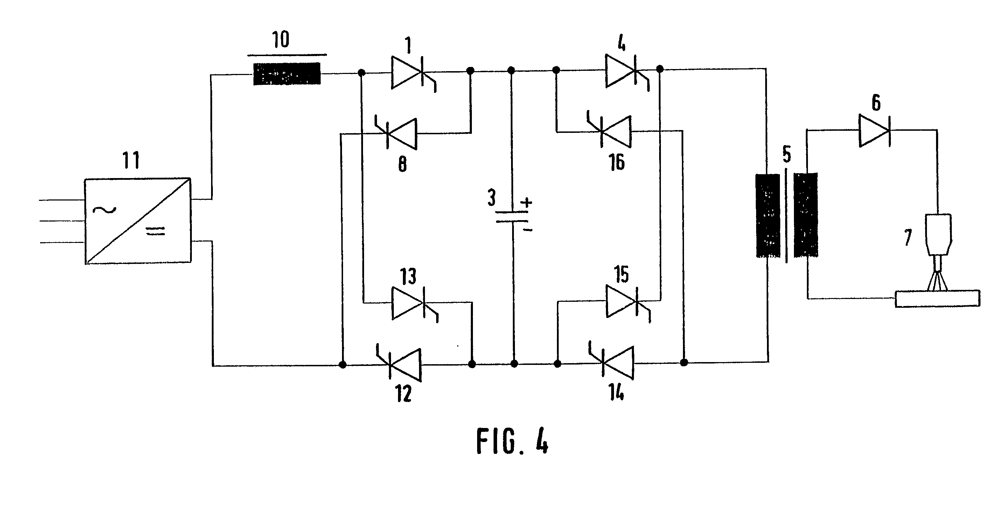

In Fig. 4 ist eine andere Ausführung der Anordnung aus Fig. 3 gezeigt. Der Unterschied besteht darin, daß der gemeinsame Punkt des ersten Thyristors 1 und des dritten Thyristors 8 sowie der gemeinsame Punkt des Kondensators 3, des zweiten Thyristors 4 und des achten Thyristors 16 kurzgeschlossen sind, während die Drossel 10 zwischen dem einen Pol des speisenden Stromgleichrichters 11 und dem gemeinsamen Punkt des ersten Thyristors 1 und des fünften Thyristors 13 liegt.

Die Wirkungsweise der in Fig. 3 gezeigten Ausführung der Anordnung ist die folgende:

Beim Einschalten der Thyristoren 1 und 12 lädt sich der Kondensator 3 vom Stromgleichrichter 11 über die eingeschalteten Thyristoren und die Drossel 10 mit der in Fig. 3 bezeichneten Polarität auf. Nach Beendigung der Aufladung und Ausschalten der Thyristoren 1 und 12 werden die Thyristoren 4 und 14 eingeschaltet, wobei sich der Kondensator 3 über die geschalteten Thyristoren und die Primärwicklung des Impulstransformators 5 entlädt. Dann läuft durch die Sekundärwicklung des Impulstransformators 5, die Diode 6 und den Schweiß-Lichtbogen 7 ein Stromimpuls. Infolge der Induktivität des Impulstransformators 5 nach der Entladung lädt sich der Kondensator 3 wieder auf eine gewisse niedrigere Spannung mit der in der Figur bezeichneten entgegengesetzten Polarität auf. Nach Beendigung des Wiederaufladens und Ausschalten der Thyristoren 4 und 14 werden die Thyristoren 8 und 13 eingeschaltet. Durch den letzten und durch die Drossel 10 wird der Kondensator 3 vom Stromgleichrichter 11 zusätzlich mit einer der in der Figur bezeichneten entgegengesetzten Polarität geladen. Danach folgt die Einschaltung der Thyristoren 15 und 16, wobei sich der Kondensator 3 über die Primärwicklung des Impulstransformators 5 wieder entlädt. Die Richtung des Entladungsstroms hinsichtlich des letzten bleibt dieselbe wie beim Einschalten der Thyristoren 4 und 14. Durch die Sekundärwicklung des Impulstransformators 5, die Diode 6 und den Schweiß-Lichtbogen 7 läuft wieder der Impulsstrom. Nach Beendigung der Entladung und Wiederaufladung des Kondensators 6 auf eine gewisse Spannung mit der in der Figur angegebenen Polarität, werden die vier Thyristorpaare in der beschriebenen Reihenfolge von neuem eingeschaltet und der Vorgang wiederholt sich.

Die Einschaltung der Thyristoren 1 und 12 bzw. 8 und 13 kann auch vor der Beendigung der ihr vorangehenden Entladung des Kondensators 3 über den Impulstransformator 5 erfolgen. In diesem Falle wird in Abhängigkeit vom Augenblick der Einschaltung eine verschiedene Endspannung zur zusätzlichen Aufladung des Kondensators 3 erhalten, und entsprechend eine verschiedene Amplitude der Schweißstromimpulse.

Die Ermittlung des Moments der Einschaltung der Thyristoren 1 und 12 kann so erfolgen, daß man die Zeit vom Augenblick der Schaltung des vorangehenden Paares der Thyristoren 15 und 16 kontrolliert, oder entsprechend beim Erreichen einer gewissen Spannung des Kondensators 3 bei seiner Wiederaufladung. Dasselbe gilt auch für die Thyristoren 8 und 13. Auf diese Weise ist es möglich, die Amplitude des Schweißimpulsstromes im Verhältnis 1 : 2 und mehr zu regeln. Mit wachsender Amplitude wächst auch die Grenzfrequenz der stabilen Arbeit der Anordnung an.

Da bei den Anordnungen der Fig. 3 und 4 im Vergleich zu den Anordnungen der Fig. 1 und Fig. 2 der Vorgang des Rückladens des Kondensators 3 fehlt, ist in diesen Fällen das Tastverhältnis um 25 bis 30 % höher.

Die Wirkungsweise der Anordnung der Fig. 4 ist vollkommen die gleiche wie die so eben beschriebene.

## Patentansprüche

1. Anordnung zur Erzeugung von Impuls-Schweißstrom, bestehend aus einem ersten, an einen der Pole der speisenden Stromquelle angeschlossenen Thyristor (1) und einem in Reihe geschalteten geschlossenen Kreis aus einem Kondensator (3), einem zweiten Thyristor (4) und der Primärwicklung eines Impulstransformators (5), wobei die Sekundärwicklung des Impulstransformators (5) über eine Diode (6) an den Schweiß-Lichtbogen (7) angeschlossen ist, dadurch gekennzeichnet, daß zwischen den ersten Thyristor (1) und den gemeinsamen Punkt des Kondensators (3) und des zweiten Thyristors (4) eine erste Drossel (2) geschaltet ist, daß der gemeinsame Punkt der Primärwicklung des Impulstransformators (5) und des Kondensators (3) an den anderen Pol der speisenden Gleichstromquelle angeschlossen ist, und daß parallel zum Kondensator (3) eine Reihenschaltung aus einer zweiten Drossel (9) und einem dritten Thyristor (8) geschaltet ist.

2. Anordnung nach Anspruch 1, dadurch gekennzeichnet, daß der gemeinsame Punkt zwischen dem ersten Thyristor (1) und der ersten Drossel (2) sowie der gemeinsame Punkt zwischen dem dritten Thyristor (8) und der zweiten Drossel (9) kurzgeschlossen sind, und daß beide parallele Drosseln (2, 9) durch eine gemeinsame Drossel (10) ersetzt sind.

3. Anordnung nach Anspruch 1 oder 2, dadurch gekennzeichnet, daß zwischen dem Kondensator (3) und dem dritten Thyristor (8) ein vierter Thyristor (12) liegt, daß zwischen dem gemeinsamen Punkt des Kondensators (3) und eines vierten Thyristors (12) und dem gemeinsamen Punkt des ersten Thyristors (1) und der speisenden Stromquelle ein fünfter Thyristor (13) geschaltet ist, daß zwischen die Primärwicklung des Impulstransformators (5) und den Kondensator (3) ein sechster Thyristor (14) geschaltet ist, daß zwischen dem gemeinsamen Punkt des zweiten Thyristors (4) und der Primärwicklung des Impulstransformators (5) und dem gemeinsamen Punkt des Kondensators (3) und des sechsten Thyristors (14) ein siebter Thyristor (15) liegt, und daß zwischen dem gemeinsamen Punkt des Kondensators (3) und des zweiten Thyristors (4) und dem gemeinsamen Punkt des sechsten Thyristors (14) und der Primärwicklung des Impulstransformators (5) ein achter Thyristor (16) liegt.

4. Anordnung nach einem der Ansprüche 1 bis 3, dadurch gekennzeichnet, daß der gemeinsame Punkt des ersten Thyristors (1) und des dritten Thyristors (8) und der gemeinsame Punkt des Kondensators (3), des zweiten Thyristors (4) und des achten Thyristors (16) kurzgeschlossen sind, während die Drossel (10) zwischen dem einen Pol eines speisenden Stromgleichrichters (11) und dem gemeinsamen Punkt der ersten Thyristors (1) und des fünften Thyristors (13) liegt.

## Claims

1. Arrangement for the generation of a pulsed welding current, comprising a first thyristor (1) connected to one of the poles of the supply current source, and a series-connected closed circuit comprising a capacitor (3), a second thyristor (4) and the primary winding of a pulse transformer (5), wherein the secondary winding of the pulse transformer (5) is connected via a diode (6) to the welding arc (7), characterised in that between the first thyristor (1) and the common point of the capacitor (3) and of the second thyristor (4) there is connected a first choke (2), and in that the common point of the primary winding of the pulse transformer (5) and of the capacitor (3) is connected to the other pole of the direct current supply source, and in that parallel to the capacitor (3) there is connected a series connection comprising a second choke (9) and a third thyristor (8).

2. Arrangement according to claim 1, characterised in that the common point between the first thyristor (12) and the first choke (2), and the common point between the third thyristor (8) and the second choke (9) are short-circuited, and in that both parallel chokes (2, 9) are replaced by a common choke (10).

3. Arrangement according to claim 1 or 2, characterised in that between the capacitor (3) and the third thyristor (8) there lies a fourth thyristor (12), in that between the common point of the capacitor (3) and of a fourth thyristor (12), and the common point of the first thyristor (1) and the supply current source, there is connected a fifth thyristor (13), is that between the primary winding of the pulse transformer (5) and the capacitor (3) there is connected a sixth thyristor (14), in that between the common point of the second thyristor (4) and the primary winding of the pulse transformer (5), and the common point of the capacitor (3) and of the sixth thyristor (14), there lies a seventh thyristor (15), and in that between the common point of the capacitor (3) and the second thyristor (4), and the common point of the sixth thyristor (14) and the primary winding of the pulse transformer (5), there lies an eighth thyristor (16).

4. Arrangement according to one of claims 1 to 3, characterised in that the common point of the first thyristor (1) and of the third thyristor (8), and the common point of the capacitor (3), of the second thyristor (4) and of the eighth thyristor (16) are short-circuited, whilst the choke (10) lies between the one pole of a supply current rectifier (11) and the common point of the first thyristor (1) and of the fifth thyristor (13).

**Revendications**

1. Dispositif pour produire un courant de soudage pulsé, constitué par un premier thyristor (1) raccordé à l'un des pôles de la source de courant d'alimentation, et par un circuit fermé, branché en série et constitué par un condensateur (3), par un second thyristor (4) et par l'enroulement primaire d'un transformateur d'impulsions (5), l'enroulement secondaire du transformateur d'impulsions (5) étant raccordé, par l'intermédiaire d'une diode (6), à l'arc de soudage (7), caractérisé en ce qu'une première bobine de self (2) est branchée entre le premier thyristor (1) et le point commun de condensateur (3) et du second thyristor (4), en ce que le point commun de l'enroulement primaire du transformateur d'impulsions (5) et du condensateur (3) est raccordé à l'autre pôle de la source de courant continu d'alimentation et en ce qu'un circuit série, formé d'une seconde bobine de self (9) et d'un troisième thyristor (8), est monté en parallèle sur le condensateur (3).

2. Dispositif selon la revendication 1, caractérisé en ce que le point commun entre le premier thyristor (1) et la première bobine de self (2) ainsi que le point commun entre le troisième thyristor (8) et la seconde bobine de self (9) sont mis en court-circuit et en ce que les deux bobines de self parallèles (2, 9) sont remplacées par une bobine de self commune (10).

3. Dispositif selon la revendication 1 ou 2, caractérisé en ce qu'un quatrième thyristor (12) est monté entre le premier condensateur (3) et le troisième thyristor (8), en ce qu'un cinquième thyristor (13) est branché entre le point commun du condensateur (3) et d'un quatrième thyristor (12) et le point commun du premier thyristor (1) et de la source de courant d'alimentation, en ce qu'un sixième thyristor (14) est branché entre l'enroulement primaire du transformateur d'impulsions (5) et le condensateur (3), en ce qu'un septième thyristor (15) est monté entre le point commun du second thyristor (4) et de l'enroulement primaire du transformateur d'impulsions (5) et le point commun du condensateur (3) et du sixième thyristor (14), et en ce qu'un huitième thyristor (16) est monté entre le point commun du condensateur (3) et du second thyristor (4) et le point commun du sixième thyristor (14) et de l'enroulement primaire du transformateur d'impulsions (5).

4. Dispositif selon l'une des revendications 1 à 3, caractérisé en ce que le point commun du premier thyristor (1) et du troisième thyristor (8) et le point commun du condensateur (3), du second thyristor (4) et du huitième thyristor (16) sont mis en court-circuit, tandis que la bobine de self (10) est montée entre l'un des pôles d'un redresseur de courant d'alimentation (11) et le point commun du premier thyristor (1) et du cinquième thyristor (13).

FIG. 1

FIG. 2

1

FIG. 3

0 087 821

FIG. 4